Europäisches Patentamt

European Patent Office

Office européen des brevets

(11) Veröffentlichungsnummer: **0 623 394 A2**

# EUROPÄISCHE PATENTANMELDUNG

(21) Anmeldenummer: **94106455.2**

(22) Anmeldetag: **26.04.94**

(51) Int. Cl.5: **B05D 1/22**

(30) Priorität: **04.05.93 DE 4314560**

(43) Veröffentlichungstag der Anmeldung:
**09.11.94 Patentblatt 94/45**

(84) Benannte Vertragsstaaten:
**BE DE ES FR GB IT NL**

(71) Anmelder: **BASF Aktiengesellschaft**
**Carl-Bosch-Strasse 38**
**D-67063 Ludwigshafen (DE)**

(72) Erfinder: **Immel, Wolfgang, Dr.**
**Carl-Bosch-Strasse 78**
**D-67063 Ludwigshafen (DE)**
Erfinder: **Loch, Harald**
**Brandenburger Strasse 5**
**D-67551 Worms (DE)**
Erfinder: **Fauth, Karl-Heinz**
**Haardtblick 7**
**D-67319 Wattenheim (DE)**
Erfinder: **Isbarn, Gunther, Dr.**
**Hintergasse 10**
**D-67311 Tiefenthal (DE)**

(54) **Verfahren zum Versprühen von hochmolekularem Polyisobutylenpulver mit inertem Trägergas.**

(57) Verfahren zum Versprühen von hochmolekularem Polyisobutylenpulver, wobei man ein inertes Trägergas in einem Mischraum in der Weise auf das hochmolekulare Polyisobutylenpulver einwirken läßt, daß dieses zunächst aufgewirbelt und anschließend gemeinsam mit dem inerten Trägergas aus der Mischvorrichtung ausgetragen wird.

Das erfindungsgemäße Verfahren eignet sich insbesondere zur Bekämpfung von unkontrollierten Ölausschüttungen auf Wasser.

EP 0 623 394 A2

Die vorliegende Erfindung betrifft ein Verfahren zum Versprühen von hochmolekularem Polyisobutylenpulver. Weiterhin betrifft die vorliegende Erfindung die Verwendung eines hochmolekularen Polyisobutylenpulvers in Form eines Gemisches mit einem inerten Trägergas zur Bekämpfung von unkontrollierten Ölausschüttungen auf Wasser.

Es ist bekannt, Polyisobutylen durch kationische Polymerisation mit Hilfe von Borhalogeniden, insbesondere durch Bortrifluorid herzustellen (EP-A 206 756, US-A 4 316 973, GB-A 525 542, GB-A 828 367). Dabei kann die Polymerisation des Isobutylens so gesteuert werden, daß Polyisobutylene mit Molmassen ($\overline{M}$v) - Viskositätsmittel - von weit mehr als 1 000 000 erhalten werden können. Derartige hochmolekulare Polyisobutylene werden u.a. in Abmischungen mit anderen Polymeren zur Herstellung von Selbstklebemassen eingesetzt. Wegen ihrer guten Hautverträglichkeit dienen Polyisobutylene u.a. auch zur Herstellung von Dichtungsringen.

In Abmischungen mit Paraffinöl und anorganischen Füllstoffen erhält man aus Polyisobutylenen auch dauerplastische Dichtstoffe, die üblicherweise in extrudierter Form als Band oder Rundprofilschnur in den Handel kommen.

Weiterhin ist es möglich, aufgrund des guten Füllstoffaufnahmevermögens des hochmolekularen Polyisobutylens aus Abmischungen des Polyisobutylens mit entsprechenden Substanzen und Füllstoffen Bahnen herzustellen, die zur Bautenabdichtung gegen Grund- und Sickerwasser, sowie im Korrosions- und Strahlenschutz eingesetzt werden. Aber auch elektrisch leitfähige und magnetische Bahnen auf Basis von Polyisobutylen finden ihre Anwendung (Ullmann's Encyclopedia of Industrial Chemistry, Vol A 21, 4. Polyisobutylene-, 555-561).

Darüber hinaus ist bekannt, zur Bekämpfung unkontrollierter Ölausschüttungen hochmolekulares Polyisobutylen zu verwenden, welches in Form eines Gemisches mit Wasser mit Hilfe einer Wasserkanone auf die mit Öl verunreinigte Wasseroberfläche aufgesprüht wird. Dieses Verfahren wird vorwiegend auf hoher See angewandt, da es sich für Binnengewässer, also für Seen, Flüsse oder Kanäle, sowie in Küstennähe als weniger praktikabel erweist. Als nachteilig hat es sich dabei u.a. erwiesen, daß die Aufbringung des hochmolekularen Polyisobutylens mit Hilfe einer apparativ aufwendigen Wasserkanone erfolgt, die üblicherweise auf einem Schiff installiert ist, welches in kleineren Binnengewässern häufig nicht oder nur unter großem Aufwand eingesetzt werden kann.

Der vorliegenden Erfindung lag daher die Aufgabe zugrunde, den geschilderten Nachteilen abzuhelfen und ein apparativ weniger aufwendiges Verfahren zum Versprühen von hochmolekularem Polyisobutylen zu entwickeln, welches insbesondere auch für kleinere Binnengewässer geeignet ist.

Demgemäß wurde ein Verfahren zum Versprühen von hochmolekularem Polyisobutylenpulver gefunden, welches dadurch gekennzeichnet ist, daß man ein inertes Trägergas in einem Mischraum in der Weise auf das hochmolekulare Polyisobutylenpulver einwirken läßt, daß dieses zunächst aufgewirbelt und anschließend gemeinsam mit dem inerten Trägergas aus der Mischvorrichtung ausgetragen wird.

Das im erfindungsgemäßen Verfahren eingesetzte hochmolekulare Polyisobutylenpulver ist u.a. durch kationische Polymerisation mit Bortrihalogeniden erhältlich (EP-A 206 756, US-A 4 316 973, GB-A 525 542, GB-A 828 367). Es weist vorzugsweise Molmassen ($\overline{M}$v) - Viskositätsmittel - von 2 000 000 bis 12 000 000, insbesondere von 4 500 000 bis 10 000 000 auf. Das hochmolekulare Polyisobutylen kann außerdem noch die in der Kunststofftechnik üblichen Zusatzstoffe wie Stabilisatoren, Füllstoffe, Gleitmittel, Nukleierungsmittel oder Weichmacher enthalten.

Da das hochmolekulare Polyisobutylen nach seiner Herstellung in der Regel als relativ grobkörniges Material vorliegt, wird es anschließend noch einer mehrstufigen Zerkleinerung unterworfen, wobei das hochmolekulare Polyisobutylen in üblichen Zerkleinerungsapparaturen in Anwesenheit von Rieselfähigmachern zerkleinert wird. Nach einem bevorzugten Verfahren erfolgt das Vermahlen zum Pulver in flüssigem Stickstoff (US-A 4 340 076).

Für das erfindungsgemäße Verfahren sind die pulverisierten, handelsüblichen, hochmolekularen Polyisobutylene, welche von der Firma BASF unter dem eingetragenen Warenzeichen Oppanol® vertrieben werden, besonders gut geeignet.

Nach dem erfindungsgemäßen Verfahren wird das hochmolekulare Polyisobutylenpulver in einem Mischraum mit einem inerten Trägergas vermischt. Als inerte Trägergase kommen dabei insbesondere Edelgase wie Helium, Neon, Argon oder Krypton, ferner Kohlendioxid, Luft sowie Stickstoff in Betracht, wobei Stickstoff bevorzugt verwendet wird.

Das erfindungsgemäße Verfahren kann u.a. dadurch ausgeführt werden, daß man das hochmolekulare Polyisobutylenpulver aus einem beweglichen Behälter heraus mit dem inerten Trägergas im Mischraum in Berührung bringt, dabei aufwirbelt und anschließend mit dem inerten Trägergas austrägt. Dabei wird beispielsweise das hochmolekulare Polyisobutylenpulver aus einem beweglichen Behälter, der mit seiner Öffnung nach unten steht, über eine Dosiervorrichtung in einen Mischraum ausgetragen und dort mit einem quer zur Ausflußrichtung des Polyisobutylens verlaufenden inerten Trägergasstrom in Berührung gebracht, dabei aufgewirbelt und anschließend mit dem Trägergas ausgetragen.

Nach einer bevorzugten Variante des erfindungsgemäßen Verfahrens wird das inerte Trägergas über eine Leitung, an deren Ende eine mit Öffnungen versehene Gummimanschette angebracht ist, in den beweglichen Behälter eingeleitet, in dem sich das hochmolekulare Polyisobutylen befindet. In diesem Fall ist also der Mischraum Teil des beweglichen Behälters. Der bewegliche Behälter weist dabei beispielsweise die flaschenähnliche Form eines Feuerlöschers auf. In dem beweglichen Behälter wird das hochmolekulare Polyisobutylen mit dem inerten Trägergasstrom in Berührung gebracht, dabei aufgewirbelt und anschließend über ein Steigrohr, dessen innere Öffnung sich am Boden des beweglichen Behälters befindet, aus diesem ausgebracht.

Vorzugsweise wird das hochmolekulare Polyisobutylenpulver in Form einer Mischung mit einem Rieselfähigmacher eingesetzt, welcher die Agglomeration des Polyisobutylenpulvers verringern soll. Als Rieselfähigmacher kommen insbesondere Metallsalze der Stearinsäure sowie Tricalciumphosphat in Frage, wobei letzteres bevorzugt eingesetzt wird. Derartige Mischungen bestehen üblicherweise aus 0,1 bis 30 Gew.-%, insbesondere aus 1 bis 25 Gew.-%, des Rieselfähigmachers und aus 70 bis 99,9 Gew.-%, insbesondere aus 75 bis 99 Gew.-% des hochmolekularen Polyisobutylenpulvers.

Mit Hilfe des erfindungsgemäßen Verfahrens ist es möglich, ohne großen apparativem Aufwand hochmolekulares Polyisobutylenpulver auf einfache Art zu versprühen. Das Gemisch aus hochmolekularem Polyisobutylenpulver und inertem Trägergas, erhältlich nach dem erfindungsgemäßen Verfahren, eignet sich insbesondere zur Bekämpfung von unkontrollierten Ölausschüttungen auf Wasser, insbesondere für Binnengewässer. Die mit Polyisobutylen behandelten Öle werden dabei viskoelastisch.

Beispiel

In einem beweglichen, länglichen Behälter, ähnlich einem Feuerlöscher mit einem Volumen von 10 Liter wurde ein Gemisch aus 80 Gew.-% Oppanol® B 246-Warenzeichen der BASF Aktiengesellschaft - mit einer Molmasse ($\overline{M}v$)-Viskositätsmittel - von 6,4•10$^6$ und aus 20 Gew.-% Tricalciumphosphat eingebracht. Über eine am äußeren Rand des Behälters sich befindliche Stickstoffpatrone und eine sich daran anschließende Gasleitung wurde unter einem Druck von 10 bar Stickstoff in den beweglichen Behälter eingeleitet. Dadurch bildete sich ein Gemisch aus hochmolekularem Polyisobutylenpulver und Stickstoff, welches über eine Steigleitung rasch aus dem beweglichen Behälter ausgetragen werden konnte.

Mit Hilfe dieses Gemisches wurde ein Wasserbecken mit 200 l Wasser, dem vorher 1 l Rohöl zugesetzt worden war, dadurch behandelt, daß man über eine sich im Innern des beweglichen Behälters befindliche Steigleitung hochmolekulares Polyisobutylenpulver auf die mit Rohöl kontaminierte Wasseroberfläche aufbrachte, wobei, bezogen auf das Wasser 2000 ppm Polyisobutylenpulver verwendet wurden. Das Rohöl bildete zusammen mit dem hochmolekularen Polyisobutylenpulver einen viskoelastischen Film, der durch Absaugen leicht von der Wasseroberfläche entfernt wurde.

Nach Beendigung des Absaugens konnten im Wasser nur mehr Rohölspuren im Bereich von 50 ppm nachgewiesen werden.

**Patentansprüche**

1. Verfahren zum Versprühen von hochmolekularem Polyisobutylenpulver, dadurch gekennzeichnet, daß man ein inertes Trägergas in einem Mischraum in der Weise auf das hochmolekulare Polyisobutylenpulver einwirken läßt, daß dieses zunächst aufgewirbelt und anschließend gemeinsam mit dem inerten Trägergas aus der Mischvorrichtung ausgetragen wird.

2. Verfahren nach Anspruch 1, dadurch gekennzeichnet, daß man ein hochmolekulares Polyisobutylenpulver mit einer Molmasse ($\overline{M}v$) - Viskositätsmittel - von 2 000 000 bis 12 000 000 verwendet.

3. Verfahren nach den Ansprüchen 1 oder 2, dadurch gekennzeichnet, daß man als inertes Trägergas Stickstoff verwendet.

4. Verfahren nach den Ansprüchen 1 bis 2, dadurch gekennzeichnet, daß man das hochmolekulare Polyisobutylenpulver aus einem beweglichen Behälter heraus mit dem inerten Trägergas im Mischraum in Berührung bringt, dabei aufwirbelt und anschließend mit dem inerten Trägergas austrägt.

5. Verfahren nach dem Anspruch 4, dadurch gekennzeichnet, daß der Mischraum Teil des beweglichen Behälters ist.

6. Verfahren nach den Ansprüchen 1 bis 5, dadurch gekennzeichnet, daß man das hochmolekulare Polyisobutylenpulver in Form einer Mischung mit einem Rieselfähigmacher einsetzt.

7. Verwendung des Gemisches aus hochmolekularem Polyisobutylenpulver und inertem Trägergas, erhältlich nach einem der Verfahren gemäß den Ansprüchen 1 bis 7 zur Bekämpfung von unkontrollierten Ölausschüttungen auf Wasser.